# EUROPEAN PATENT APPLICATION

(11) **EP 4 509 797 A1**
(43) Date of publication of application: **19.02.2025**
(21) Application number: 23921589.0
(22) Date of filing: 31.08.2023
(51) Int. Cl.: G01B 11/02, G01B 11/22

(54) **POINT CLOUD MATCHING-BASED WELDED SEAM SIZE MEASUREMENT METHOD AND SYSTEM, MEDIUM, AND DEVICE**

(30) Priority: 29.06.2023 CN 202310789213
(71) Applicant: Shanghai Mechanized Construction Group Co., Ltd., Shanghai 200072 (CN)
(72) Inventor: CHEN, Xiaoming, Hongkou District Shanghai 200080 (CN); MA, Liang, Shanghai 200072 (CN); YUAN, Shanshan, Xuhui District Shanghai 200233 (CN); WANG, Li, Xuhui District Shanghai 200233 (CN); JIA, Baorong, Shanghai 200072 (CN); HUANG, Xiling, Xuhui District Shanghai 200233 (CN); ZHOU, Feng, Xuhui District Shanghai 200233 (CN); XU, Bin, Xuhui District Shanghai 200233 (CN); LUO, Haiyan, Xuhui District Shanghai 200233 (CN); ZHOU, Feng, Shanghai 200072 (CN); LI, Jiqing, Shanghai 200072 (CN); LIU, Wei, Shanghai 200072 (CN); SHEN, Zexin, Shanghai 200072 (CN)
(74) Representative: Ullrich & Naumann PartG mbB
(86) International application number: PCT/CN2023/116192
(87) International publication number: WO 2025/000685

(57) **Abstract**

A weld seam size inspection method, system, medium and device based on point cloud matching, relates to a technical field of construction engineering, the method comprising: obtaining first point cloud data of a region to be welded before welding collected by a three-dimensional laser scanner, as well as second point cloud data of a welded region after welding collected by the three-dimensional laser scanner; based on the first point cloud data and the region to be welded, determining point cloud data of a region of interest to be welded; based on the second point cloud data and the welded region, determining point cloud data of a welded region of interest; matching the point cloud data of the region of interest to be welded with the point cloud data of the welded region of interest to obtain a matching result; extracting a weld seam point cloud set according to the matching result; and based on a point cloud principal component analysis method, analyzing the weld seam point cloud set and obtaining sizes of each weld seam. An implementation of the technical solution provided in the present application can improve an efficiency and accuracy of steel bar weld seam inspection.

## Description

### TECHNICAL FIELD

The present application relates to a technical field of construction engineering, and in particular, relates to a weld seam size inspection method, system, medium and device based on point cloud matching.

### BACKGROUND ART

Steel bar is widely used in a field of national infrastructure construction such as roads, buildings, and bridges, especially in a production and construction of steel cages for diaphragm walls, it is necessary to weave steel bars into a cage structure according to design requirements, which is a structural form used to reinforce and support diaphragm walls. Its main function is to enhance mechanical properties such as bending resistance, shear resistance, and compression resistance of the diaphragm walls, ensuring its stability and safety, a main connection method of the steel bars of the diaphragm walls is welding, and welding quality of weld seams of the diaphragm walls determines a performance of a steel frame, as well as safety and stability of an entire steel cage.

Weld seam size of the steel bars is an important criterion for judging a quality of the weld seam, a traditional weld seam inspection method is an appearance inspection method, which is mainly manually measured with a measuring ruler, this method is easily affected by a subjective influence of a subject, resulting in inconsistent inspection standards and inaccurate inspection results.

### SUMMARY

The present application provides a weld seam size inspection method, system, medium and device based on point cloud matching, which can improve an efficiency and accuracy of steel bar weld seam inspection, thereby ensuring a safety and stability of an entire steel cage.

In a first aspect, the present application provides a weld seam size inspection method based on point cloud matching, which comprises:
obtaining first point cloud data of a region to be welded before welding collected by a three-dimensional laser scanner, as well as second point cloud data of a welded region after welding collected by the three-dimensional laser scanner;
based on the first point cloud data and the region to be welded, determining point cloud data of a region of interest to be welded;
based on the second point cloud data and the welded region, determining point cloud data of a welded region of interest;
matching the point cloud data of the region of interest to be welded with the point cloud data of the welded region of interest to obtain a matching result;
extracting a weld seam point cloud set according to the matching result; and
based on a point cloud principal component analysis method, analyzing the weld seam point cloud set and obtaining sizes of each weld seam.

By adopting the above technical solution, utilizing the three-dimensional laser scanner to collect the first point cloud data of the region to be welded before welding and the second point cloud data of the welded region after welding, and determining the point cloud data of the region of interest to be welded and the point cloud data of the welded region of interest, matching the point cloud data of the region of interest to be welded with the point cloud data of the welded region of interest, extracting the weld seam point cloud set according to the matching result, and then analyzing the weld seam point cloud set based on the point cloud principal component analysis method to obtain the sizes of each weld seam, compared with existing technology, it can reduce subjective influencing factors of manual measurement, and effectively improve an inspection accuracy and efficiency of the weld seam.

Optionally, obtaining first point cloud data of the region to be welded before welding collected by the three-dimensional laser scanner, as well as second point cloud data of the welded region after welding collected by the three-dimensional laser scanner, comprising: adjusting a position and orientation of the three-dimensional laser scanner according to the weld seam in the region to be welded, so that the weld seam in the region to be welded is within a measurement range of the three-dimensional laser scanner; obtaining the first point cloud data of the region to be welded collected by the three-dimensional laser scanner; adjusting the position and orientation of the three-dimensional laser scanner according to the weld seam in the welded region, so that the weld seam in the welded region is within the measurement range of the three-dimensional laser scanner; and obtaining the second point cloud data of the welded region collected by the three-dimensional laser scanner.

By adopting the above technical solution, adjusting the position and orientation of the three-dimensional laser scanner according to adaptability of the weld seam, so that both the weld seam in the region to be welded and the weld seam in the welded region are within the measurement range of the three-dimensional laser scanner, thereby improving a quality and efficiency of point cloud data inspection of the weld seam.

Optionally, based on the first point cloud data and the region to be welded, determining point cloud data of the region of interest to be welded, further comprising: denoising and downsampling the first point cloud data to obtain a first target point cloud data; estimating a first maximum value set and a first minimum value set of weld seam coordinates in the three-dimensional coordinate direction in the region to be welded; and determining the point cloud data of the region of interest to be welded based on the first maximum value set, the first minimum value set, and the first target point cloud data.

By adopting the above technical solution, denoising and downsampling the first point cloud data can remove noise and redundant information, reduce a number of point cloud data, and estimate the first maximum value set and the first minimum value set of weld seam coordinates in the three-dimensional coordinate direction in the region to be welded, which can enable fine processing and control of the region to be welded, further improving the accuracy and efficiency of inspecting the region to be welded.

Optionally, based on the second point cloud data and the welded region, determining point cloud data of the welded region of interest, comprising: denoising and downsampling the second point cloud data to obtain a second target point cloud data; estimating a second maximum value set and a second minimum value set of weld seam coordinates in the three-dimensional coordinate direction in the welded region; and determining the point cloud data of the welded region of interest based on the second maximum value set, the second minimum value set, and the second target point cloud data.

By adopting the above technical solution, denoising and downsampling the second point cloud data can remove noise and redundant information, reduce the number of point cloud data, and estimate the second maximum value set and the second minimum value set of weld seam coordinates in the three-dimensional coordinate direction in the welded region, which can enable fine processing and control of the welded region, further improving the accuracy and efficiency of inspecting the welded region.

Optionally, matching the point cloud data of the region of interest to be welded with the point cloud data of the welded region of interest to obtain the matching result, comprising: based on an iterative closest point method, matching the point cloud data of the region of interest to be welded with the point cloud data of the welded region of interest, and calculating a position and orientation transformation matrix; and using the position and orientation transformation matrix as the matching result.

By adopting the above technical solution, matching the point cloud data of the region of interest to be welded with the point cloud data of the welded region of interest, merging the point cloud data of two regions into a whole, and calculating the position and orientation transformation matrix can achieve alignment and matching between point clouds, so as to subsequent process and analyze the welded region, and improve the accuracy and efficiency of inspecting the welded region.

Optionally, extracting the weld seam point cloud set according to the matching result, comprising: based on the position and orientation transformation matrix in the matching result, converting the point cloud data of the welded region of interest to the region of interest to be welded; for any target point in the welded region of interest: determining the point cloud data with a shortest Euclidean distance to a target point in the region of interest to be welded, and using a point corresponding to the point cloud data of the welded region with the shortest Euclidean distance greater than a weld seam extraction threshold as a weld seam point in the region of interest to be welded, obtaining the weld seam point cloud set.

By adopting the above technical solution, by using Euclidean distance to determine the point cloud data with the shortest distance in the region of interest to be welded, and providing the point with the shortest distance as the weld seam point, Euclidean distance is a distance between points and is an important indicator for evaluating the matching and registration effect of point cloud data, using the point corresponding to the point cloud data of the welded region with the shortest Euclidean distance greater than the weld seam extraction threshold as the weld seam point in the region of interest to be welded, which can control an extraction progress and quantity of the weld seam point, effectively improving the accuracy and efficiency of subsequent weld seam inspection.

Optionally, based on the point cloud principal component analysis method, analyzing the weld seam point cloud set and obtaining sizes of each weld seam, comprising: comparing the sizes of each weld seam with a preset standard weld seam size range, wherein the sizes of the weld seam comprise length, width, and depth; determining the weld seam that is inconsistent with the preset standard weld size range as an unqualified weld seam; determining the weld seam that meets the preset standard weld seam size range as a qualified weld seam.

By adopting the above technical solution, comparing a measured weld seam size with the preset standard weld seam size range, an inspection result of the weld seam can be obtained, which allows personnel to clearly determine whether the weld seam is compliant, thereby facilitating subsequent weld seam inspection and acceptance.

A weld seam size inspection system based on point cloud matching is provided in a second aspect of the present application, comprising:
a point cloud data acquisition module is configured to obtain first point cloud data of a region to be welded before welding collected by a three-dimensional laser scanner, and second point cloud data of a welded region after welding collected by the three-dimensional laser scanner;
a region of interest acquisition module is configured to determine point cloud data of a region of interest to be welded based on the first point cloud data and the region to be welded; based on the second point cloud data and the welded region, determine the point cloud data of a welded region of interest;
a point cloud matching module is configured to match the point cloud data of the region of interest to be welded with the point cloud data of the welded region of interest, and obtain a matching result;
a weld seam point cloud set extraction module is configured to extract weld seam point cloud set based on the matching result;
a weld seam size generation module is configured to analyze the weld seam point cloud set based on a point cloud principal component analysis method, and obtain sizes of each weld seam.

A computer-readable storage medium is provided in a third aspect of the present application, the instructions are suitable for loading and executing by a processor above method steps.

An electronic device is provided in a fourth aspect of the present application comprising: a processor and a memory; wherein, the memory stores a computer program, the computer program is suitable for loading and executing by the processor to implement the above method steps.

One or more technical solutions provided in the embodiments of the present application have at least the following technical effects or advantages:
1. Utilizing the three-dimensional laser scanner to collect the first point cloud data of the region to be welded before welding and the second point cloud data of the welded region after welding, and determining the point cloud data of the region of interest to be welded and the point cloud data of the welded region of interest, matching the point cloud data of the region of interest to be welded with the point cloud data of the welded region of interest, extracting the weld seam point cloud set according to the matching result, and then analyzing the weld seam point cloud set based on the point cloud principal component analysis method to obtain the sizes of each weld seam, compared with existing technology, it can reduce subjective influencing factors of manual measurement, and effectively improve the inspection accuracy and efficiency of the weld seam;
2. The present application matches the point cloud data of the region of interest to be welded with the point cloud data of the welded region of interest, merges the point cloud data of two regions into the whole, and calculates the position and orientation transformation matrix can achieve alignment and matching between point clouds, so as to subsequent process and analyze the welded region, and improve the accuracy and efficiency of inspecting the welded region;
3. The present application compares the measured weld seam size with the preset standard weld seam size range, the inspection result of the weld seam can be obtained, which allows personnel to clearly determine whether the weld seam is compliant, thereby facilitating subsequent weld seam inspection and acceptance.

### BRIEF DESCRIPTION OF THE DRAWINGS

FIG. 1 is a flow diagram of a weld seam size inspection method based on point cloud matching according to an embodiment of the present application.
FIG. 2 is a schematic view of a three-dimensional laser scanner for inspecting a weld seam according to an embodiment of the present application.
FIG. 3 is a schematic module view of a weld seam size inspection system based on point cloud matching according to an embodiment of the present application.
FIG. 4 is a schematic structure view of an electronic device according to an embodiment of the present application.

List of reference signs: 301. point cloud data acquisition module; 302. region of interest acquisition module; 303. point cloud matching module; 304. weld seam point cloud set extraction module; 305. weld seam size generation module; 400. electronic device; 401. processor; 402. communication bus; 403. user interface; 404. network interface; 405. memory.

### DETAILED DESCRIPTION

In order to enable those skilled in the art to better understand the technical solutions in this description, the following will provide a clear and complete description of the technical solutions in the embodiments of this description in conjunction with the accompanying drawings, obviously, the described embodiments are only a part of the embodiments of the present application, not all of them.

In the description of the embodiments of the present application, words such as "for example" or "for instance" are used to indicate examples, illustrations, or clarifications. Any embodiments or design schemes described as "for example" or "for instance" in the present application should not be interpreted as being more preferred or advantageous than other embodiments or design schemes. Specifically, the use of words such as "for example" or "for instance" is intended to present relevant concepts in a concrete way.

In the description of the embodiments of the present application, the term "multiple" refers to two or more. For example, multiple systems refer to two or more systems, and multiple screen terminals refer to two or more screen terminals. In addition, the terms "first" and "second" are only used for descriptive purposes and cannot be understood as indicating or implying relative importance or implying the technical features indicated. Thus, the features limited to "first" and "second" may explicitly or implicitly include one or more of these features. The terms "including", "containing", "having", and their variations all mean "including but not limited to", unless otherwise specifically emphasized.

In order to facilitate the understanding of the methods and systems provided by the embodiments of the present application, before introducing the embodiments of the present application, the background of the embodiments of the present application will be introduced first.

Steel bar is a necessity in construction, and steel bar which is produced by a steel factory cannot meet needs of all buildings, in order to meet a length or strength of their own steel bar, a construction party will weld the steel bar to meet requirements. This operation is very common and can save costs and improve material utilization, especially in a production and construction of steel cages for diaphragm walls, steel bars need to be woven and welded into a cage structure according to design requirements, which is a structural form used to reinforce and support diaphragm walls.

Welding quality of steel bar determines a safety and stability of an entire steel cage, and weld seam size of the steel bar is an important criterion for judging a quality of the weld seam. A traditional weld seam inspection method mainly adopts manual appearance inspection, which involves manually measuring with a measuring ruler and then manually observing and judging, this weld seam inspection method is easily affected by a subjective influence of an inspection personnel, resulting in inaccurate inspection results of the weld seam.

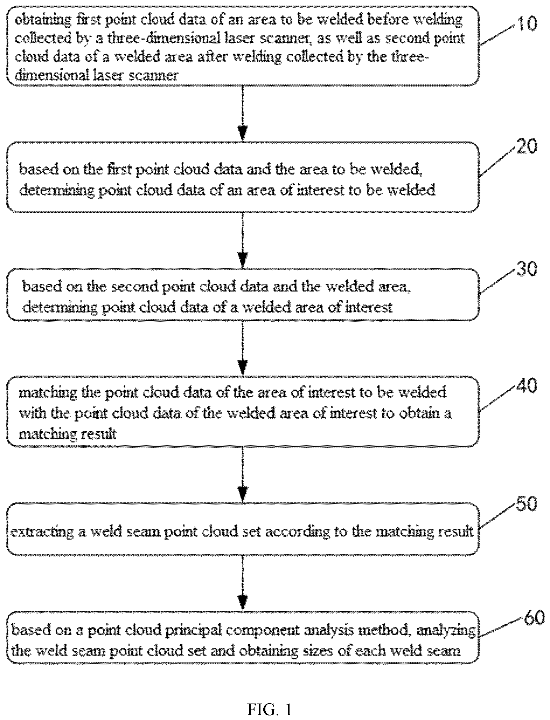

In an embodiment, referring to FIG. 1, a flow diagram of a weld seam size inspection method based on point cloud matching is proposed, which can be implemented by computer programs, single chip microcomputers, and can also operate on a weld seam size inspection system based on point cloud matching. This computer program can be integrated into applications or run as an independent tool application, specifically, in the embodiment of the present application, the method can be applied to a controller of a photography lamp, which includes steps 10 to 60, the above steps are as follows:

Step 10: obtaining first point cloud data of a region to be welded before welding collected by a three-dimensional laser scanner, as well as second point cloud data of a welded region after welding collected by the three-dimensional laser scanner.

The three-dimensional laser scanner is a measuring device that utilizes a principle of laser ranging to obtain three-dimensional coordinate information by scanning an object surface. It can quickly and accurately obtain the three-dimensional shape information of an object surface, working principle of three-dimensional laser scanner is to emit a laser beam, which is reflected back after being irradiated onto the object surface, the three-dimensional laser scanner receives a reflected laser signal and calculates distance information of the object surface according to a time delay of the signal, thereby obtaining the three-dimensional coordinate information of the object surface, in this embodiment of the present application, a three-dimensional laser scanner is adopted to inspect weld seam.

Point cloud data is a data set in three-dimensional space composed of a plurality of points, each of which includes a position in space and possibly other attributes. Point cloud data can represent shape, texture, surface characteristics, and other information of objects or scenes. In the embodiment of the present application, the point cloud data can be collected by the three-dimensional laser scanner. the first point cloud data refers to the data set obtained from the region to be welded before welding collected by the three-dimensional laser scanner, and the second point cloud data refers to the data set obtained from the welded region collected by the three-dimensional laser scanner.

On a basis of the above embodiment, as an optional embodiment, the step of obtaining the first point cloud data of the region to be welded before welding collected by the three-dimensional laser scanner, and the second point cloud data of the welded region after welding collected by the three-dimensional laser scanner, further include the following steps:
Step 101: adjust a position and orientation of the three-dimensional laser scanner according to the weld seam in the region to be welded, and the weld seam in the region to be welded is within a measurement range of the three-dimensional laser scanner.
Step 102: obtain the first point cloud data of the region to be welded collected by the three-dimensional laser scanner.

Specifically, before welding, the three-dimensional laser scanner is installed in the region to be welded, the three-dimensional laser scanner is wirelessly connected to a computer device, and before measurement, the three-dimensional laser scanner is debugged and calibrated to determine parameters such as measurement range, scanning speed, and scanning resolution. Generally speaking, scanning range and scanning speed should be adjusted according to size and shape of a region to be tested to ensure comprehensiveness and efficiency of scanning. Before measuring, adjust the position and orientation of the three-dimensional laser scanner according to the weld seam in the region to be welded, and the weld seam in the region to be welded is within the measurement range of the three-dimensional laser scanner, during scanning, it is necessary to ensure that a distance and angle between the three-dimensional laser scanner and the region to be tested are appropriate, so as to ensure comprehensiveness and overlap of scanning, specific adjustment parameters can be adjusted by personnel themselves.

Furthermore, after adjusting all parameters, control the three-dimensional laser scanner to start working. Based on the data collected by the three-dimensional laser scanner, the first point cloud data of the region to be welded is generated based on 3D reconstruction software or point cloud processing software, the first point cloud data is three-dimensional data composed of a large number of points that can reflect the shape and characteristics of the region to be welded.

Step 103: adjust the position and orientation of the three-dimensional laser scanner according to the weld seam in the welded region, so that the weld seam in the welded region is within the measurement range of the three-dimensional laser scanner.

Step 104:obtain the second point cloud data of the welded region collected by the three-dimensional laser scanner.

Specifically, install the three-dimensional laser scanner onto the welded region, and adjust the position and orientation of the three-dimensional laser scanner according to the weld seam in the welded region, and the weld seam in the welded region is within the measurement range of the three-dimensional laser scanner. A specific implementation process can refer to step 101 above, which will not be further elaborated here. Control the three-dimensional laser scanner to start working, based on the data collected by the three-dimensional laser scanner, and the second point cloud data of the region to be welded is generated using 3D reconstruction software or point cloud processing software, can reflect the shape and characteristics of the region to be welded, and the second point cloud data is three-dimensional data composed of the large number of points.

Step 20: based on the first point cloud data and the region to be welded, determine the point cloud data of the region of interest to be welded.

Due to a possibility of a large scanning region and overlapping scan in three-dimensional laser scanner, it is necessary to process the first point cloud data to obtain the point cloud data of the region of interest to be welded, in order to reduce a subsequent computational workload and improve an efficiency and accuracy of inspection. The point cloud data of the region of interest to be welded refers to a registration, segmentation, and extraction of the first point cloud data through a point cloud processing software, and finally the point cloud data within the region is obtained. The point cloud data of the region of interest to be welded includes coordinate information of all points within that region.

Specifically, the first point cloud data is processed for denoising and downsampling to obtain a first target point cloud data. Estimate a first maximum value set and a first minimum value set of weld seam coordinates in a three-dimensional coordinate direction in the region to be welded. Based on the first maximum value set and the first minimum value set, determine a coordinate range of the region to be welded in the three-dimensional coordinate axis direction. A region formed by this coordinate range is the region of interest to be welded, filtering the point cloud data of the region to be welded, extracting coordinate values of the weld seam point cloud data in the three-dimensional coordinate direction in the region of interest to be welded, and obtaining the point cloud data of the region of interest to be welded.

On the basis of the above embodiment, as an optional embodiment, the step of determining the point cloud data of the region of interest to be welded based on the first point cloud data and the region to be welded further include the following steps:
Step 201: process the first point cloud data for denoising and downsampling to obtain the first target point cloud data.

Specifically, due to a possibility of some noise or outliers in the first point cloud data, it is necessary to perform denoising processing, a denoising method can utilize filtering algorithms such as Gaussian filtering, median filtering, bilateral filtering, etc. These filtering algorithms can effectively remove noise and outliers, while preserving valuable information in point cloud data.

Furthermore, since the first point cloud data usually includes the large number of points, it is necessary to downsample the denoised point cloud data to reduce its quantity and complexity, downsampling methods can adopt voxel grid downsampling, random sampling, distance based sampling, etc. These methods can be optimized according to a distribution and density of point cloud data to obtain the first target point cloud data with a certain degree of accuracy after downsampling.

Step 202: estimate the first maximum value set and the first minimum value set of weld seam coordinates in the three-dimensional coordinate direction in the region to be welded.

Specifically, segment the point cloud data of the region to be welded, extract the region where the weld seam is located from the point cloud data, and obtain the weld seam point cloud data. Process the weld seam point cloud data to obtain the coordinate values of the weld seam point cloud data in the three-dimensional coordinate direction, namely x-axis coordinate value, y-axis coordinate value, and z-axis coordinate value, in this embodiment of the present application, the three-dimensional coordinate direction refers to three mutually perpendicular axes that describe the position or direction in space. In a three-dimensional coordinate system, three axes are used to represent position or direction, these axes are X-axis, Y-axis, and Z-axis, respectively, each of which is perpendicular to a plane perpendicular to it.

Furthermore, statistical analyzing is performed on the coordinate values of the weld seam point cloud data in x-axis, y-axis, and z-axis directions to obtain the first minimum value set in the x-axis, y-axis, and z-axis directions, as well as the first minimum value set in the x-axis, y-axis, and z-axis directions. Statistical methods such as range method, quantile method, standard deviation method can be used for calculation.

Step 203: the point cloud data of the region of interest to be welded is determined based on the first maximum value set, the first minimum value set, and the first target point cloud data.

Specifically, segment the first target point cloud data, divide it into weld region and non-weld region. process the point cloud data of the weld region to obtain the coordinate values of the weld seam point cloud data in the three-dimensional coordinate direction, such as z-axis coordinate value. Based on the first maximum value set and the first minimum value set, determine the coordinate range of the region of interest to be welded in the three-dimensional coordinate direction, and filter the point cloud data of the region of interest to be welded, and retain the coordinate values of the weld seam point cloud data in the three-dimensional coordinate direction within the region of interest to be welded, and obtain the point cloud data of the region of interest to be welded, and a point cloud data with certain accuracy and precision for subsequent processing and analysis.

Step 30: based on the second point cloud data and the welded region, the point cloud data of the welded region of interest is determined.

Due to a possibility of the large scanning region and overlapping scan in three-dimensional laser scanner, it is necessary to process the second point cloud data to obtain the point cloud data of the welded region of interest, in order to reduce the subsequent computational workload and improve an efficiency and accuracy of inspection. The point cloud data of the welded region of interest refers to registration, segmentation, and extraction of the second point cloud data through a point cloud processing software, and finally obtaining the point cloud data within the region. The point cloud data of the welded region of interest includes the coordinate information of all points within that region.

Specifically, process the second point cloud data for denoising and downsampling to obtain a second target point cloud data, estimate a second maximum value set and a second minimum value set of weld seam coordinates in the three-dimensional coordinate direction in the welded region. Based on the second maximum value set and the second minimum value set, determine a coordinate range of the welded region in the three-dimensional coordinate axis direction, and a region formed by the coordinate range is the welded region of interest. Filte ring the point cloud data of the welded region, and extracte the point cloud data whose coordinate values in the three-dimensional coordinate direction within the region in the welded region of interest, and obtain the point cloud data of the welded region of interest.

On the basis of the above embodiment, as an optional embodiment, the step of determining the point cloud data of the welded region of interest based on the second point cloud data and the welded region can further include the following steps:
Step 301: process the second point cloud data for denoising and downsampling to obtain the second target point cloud data.
Step 302: estimate the second maximum value set and the second minimum value set of weld seam coordinates in the three-dimensional coordinate direction in the welded region.
Step 303: determine the point cloud data of the welded region of interest based on the second maximum value set, the second minimum value set, and the second target point cloud data.

Specifically, regard implementation methods of above steps 301-303, reference can be made to above steps 201-203, a determination of point cloud data for the welded region of interest is same as the determination of point cloud data for the region of interest to be welded, and will not be further elaborated here.

Step 40: match the point cloud data of the region of interest to be welded with the point cloud data of the welded region of interest to obtain a matching result.

Point cloud matching refers to a registration of two or more point cloud data to achieve alignment and fusion of point cloud data. In the embodiment of the present application, matching the point cloud data of the region of interest to be welded with the point cloud data of the welded region of interest, merging the point cloud data of two regions into a whole, and calculating a position and orientation transformation matrix ia able to achieve alignment and matching between point clouds, so as to subsequent process and analyze the welded region, and improve accuracy and efficiency of inspecting the welded region.

Specifically, an iterative closest point method is a method used to register and align two or more point cloud data, optimizing a registration error between point cloud data through an iterative method until the error is minimized. The point cloud data of the welded region of interest serves as a reference point cloud, and the point cloud data of the region of interest to be welded serves as a point cloud to be registered, select a point from the point cloud to be registered, find the closest point in the reference point cloud, and calculat a distance error between corresponding point pairs between the point cloud to be registered and the reference point cloud, in order to measure the registration error between two point cloud data. optimize a rigid body transformation matrix of the point cloud to be registered by minimizing the distance error, so that its position and orientation relative to the reference point cloud are closer, and repeat the above steps until the distance error between the point cloud data reaches a preset threshold or reaches a maximum number of iterations. Reuse an iterative closest point algorithm to obtain the position and orientation transformation matrix, transform the point cloud data of the region of interest to be welded to align with the point cloud data of the welded region of interest, and the position and orientation transformation matrix is taken as the matching result.

Step 50: extract a weld seam point cloud set according to the matching result.

Specifically, based on the position and orientation transformation matrix in the matching result, each point in the welded region of interest is transformed through the position and orientation transformation matrix, thereby obtain its corresponding point on the region of interest to be welded. By sequentially processing the point cloud data of the region of interest to be welded, that is, for any target point in the welded region of interest, calculate an Euclidean distance between each point and the target point, and select the point with a smallest distance as a corresponding point, if a distance is less than or equal to a weld seam extraction threshold, the point cloud data of the welded region corresponding to that point is added to the weld seam point cloud set, and obtain the weld seam point cloud set, which can control an extraction progress and quantity of the weld seam point, and the accuracy and efficiency of subsequent weld seam inspection is effectively improved.

Step 60: based on a point cloud principal component analysis method, analyze the weld seam point cloud set, and obtain sizes of each weld seam.

The point cloud principal component analysis method involves projecting point cloud data onto a principal component axis to obtain a variance and mean in each principal component direction, thereby obtaining size information of point cloud data in each direction.

Specifically, converte the weld seam point cloud set into a point cloud matrix and performe a principal component analysis. Each row of the point cloud matrix corresponds to a point, and each column corresponds to a dimension (such as X, Y, Z coordinates), and the the point cloud matrix is analyzed using principal component analysis to obtain the variance and mean in each principal component direction. The principal component direction corresponds to a main distribution direction of point cloud data, and the sizes of each weld seam in the X, Y, and Z directions can be determined based on its direction and variance information. For example, the standard deviation in each principal component direction can be calculated to obtain the size information of the weld seam in each direction, the size of the weld seam in the X, Y, and Z directions corresponds to a length, width, and depth of the weld seam, respectively.

Furthermore, after obtaining the sizes of each weld seam, compare the sizes of each weld seam with a preset standard weld seam size range, the preset standard weld seam size range can be a manually provided weld seam length standard range, width standard range, and depth standard range. Indentify the weld seam that does not conform tothe preset standard weld seam size range as an unqualified weld seam and the weld seam that conform to the preset standard weld seam size range as a qualified weld seam, this allows personnel to clearly determine whether the weld seam is compliant, thereby facilitating subsequent weld seam inspection and acceptance.

Furthermore, the weld seam are classified according to the size to obtain a number and proportion of the weld seam within different size ranges. At the same time, statistical measures such as an average size and standard deviation of the weld seam is further calculated to provide a more comprehensively description of a size distribution of the weld seam.

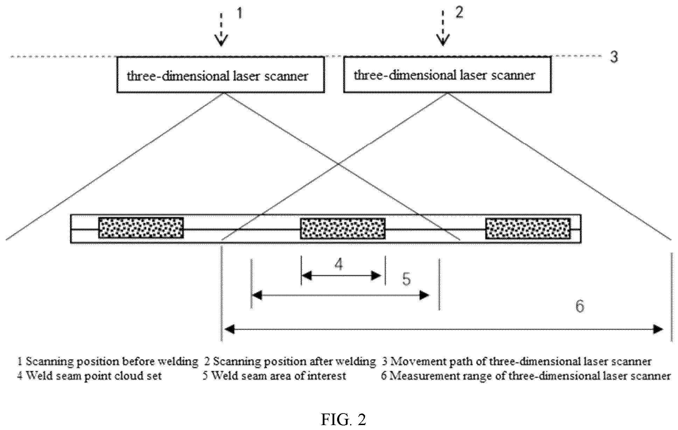

Referring to FIG. 2, FIG. 2 is a schematic view of the three-dimensional laser scanner for inspecting the weld seam provided in the embodiment of the present application, an implementation principle according to the embodiment of the present application will be explained below in conjunction with FIG. 2. Firstly, control the three-dimensional laser scanner to a scanning position before welding, adjust the position and orientation of the three-dimensional laser scanner so that the weld seam in the region to be welded is within the measurement range of the three-dimensional laser scanner, and obtain the first point cloud data of the region to be welded before welding collected by the three-dimensional laser scanner, control the three-dimensional laser scanner to move along a preset movement path to the scanning position after welding, adjust the position and orientation of the three-dimensional laser scanner again, and the weld seam in the welded region is within the measurement range of the three-dimensional laser scanner, and obtaining the second point cloud data of the welded region after welding. Based on the first point cloud data and the region to be welded, determine the point cloud data of the region of interest to be welded, based on the second point cloud data and the welded region, determine the point cloud data of the welded region of interest. Match the point cloud data of the region of interest to be welded with the point cloud data of the welded region of interest to obtain the matching result; extract the weld seam point cloud set according to the matching result, and analyz the weld seam point cloud set based on the point cloud principal component analysis method to obtain the sizes of each weld seam.

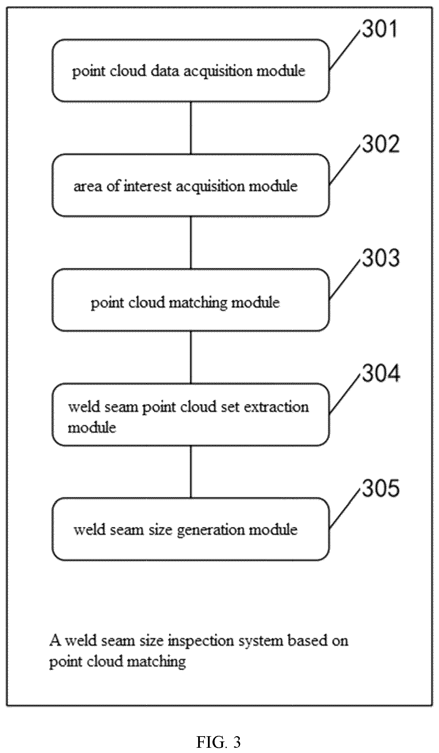

Referring to FIG. 3, FIG. 3 is a schematic module view of a weld seam size inspection system based on point cloud matching provided in the embodiment of the present application, the weld seam size inspection system based on point cloud matching includes: a point cloud data acquisition module 301, a region of interest acquisition module 302, a point cloud matching module 303, a weld seam point cloud set extraction module 304, and a weld seam size generation module 305.

The point cloud data acquisition module 301 is configured to obtain the first point cloud data of the region to be welded before welding collected by the three-dimensional laser scanner, and the second point cloud data of the welded region after welding collected by the three-dimensional laser scanner;

The region of interest acquisition module 302 is configured to determine the point cloud data of the region of interest to be welded based on the first point cloud data and the region to be welded; based on the second point cloud data and the welded region, determine the point cloud data of the welded region of interest;

The point cloud matching module 303 is configured to match the point cloud data of the region of interest to be welded with the point cloud data of the welded region of interest, and obtain the matching result;

The weld seam point cloud set extraction module 304 is configured to extract weld seam point cloud set based on the matching result;

The weld seam size generation module 305 is configured to analyze the weld seam point cloud set based on point cloud principal component analysis method, and obtain the sizes of each weld seam.

It should be noted that the system provided in the above embodiments only illustrates a division of each functional module when implementing its functions, in practical applications, the above functions can be assigned to different functional modules as needed, that is, an internal structure of the device can be divided into different functional modules to complete all or part of the functions described above. In addition, the system and method embodiments provided in the above embodiments belong to a same concept, and a specific implementation process is detailed in the method embodiments, which will not be further elaborated here.

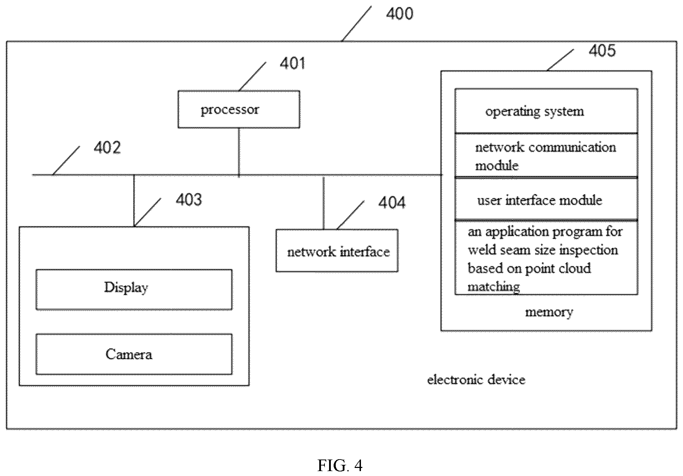

The present application further discloses an electronic device. Referring to FIG. 4, FIG. 4 is a schematic structure view of an electronic device disclosed in an embodiment of the present application. The electronic device 400 includes: at least one processor 401, at least one network interface 404, an user interface 403, a memory 405, and at least one communication bus 402.

Wherein, the communication bus 402 is configured to achieve connection communication between these components.

Wherein, the user interface 403 can include a display and a camera, and an optional user interface 403 can further include a standard wired interface and a wireless interface.

Wherein, an optional network interface 404 can include the standard wired interface and the wireless interface (such as a WI-FI interface).

Wherein, the processor 401 may include one or more processing cores. The processor 401 utilizes various interfaces and lines to connect various parts of an entire server, and executes various functions of the server and processes data by running or executing instructions, programs, code sets, or instruction sets stored in the memory 405, as well as calling data stored in the memory 405. Optionally, the processor 401 can be implemented in at least one hardware form from Digital Signal Processing (DSP), Field-Programmable Gate Array (FPGA), or Programmable Logic Array (PLA). the processor 401 can integrate one or a combination of Central Processing Units (CPU), Graphics Processing Units (GPU), and modem. wherein, the CPU mainly processes an operating system, a user interface, and an application program; the GPU is configured to render and draw content that needs to be displayed on the display; the modem is configured to handle wireless communication. It can be understood that the above modem may not be integrated into the processor 401 and can be implemented separately through a single chip.

Wherein, the memory 405 can include Random Access Memory (RAM) or Read-Only Memory (ROM). Optionally, the memory 405 includes a non-transitory computer-readable storage medium. The memory 405 can be used to store instructions, programs, code, code sets, or instruction sets. The memory 405 may include a storage program region and a storage data region, wherein the storage program region may store instructions for implementing the operating system, instructions for at least one function (such as touch function, sound playback function, image playback function, etc.), instructions for implementing various method embodiments mentioned above, etc; the storage data region can store the data involved in the various method embodiments mentioned above. Optionally, the memory 405 can also be at least one storage device located departing from the processor 401 mentioned above. Referring to FIG. 4, the memory 405 as a computer storage medium may include an operating system, a network communication module, a user interface module, and an application program for a weld seam size inspection method based on point cloud matching.

In the electronic device 400 shown in FIG. 4, the user interface 403 is mainly configured to provide an input interface for a user and obtain the data input by the user; the processor 401 can be configured to call the application program stored in the memory 405 for a weld seam size inspection method based on point cloud matching, when executed by one or more processors 401, which causes the electronic device 400 to execute one or more of the methods mentioned in the above embodiments. It should be noted that for the method embodiments mentioned above, in order to simplify the description, they are all described as a series of action combinations, however, those skilled in the art should be aware that the present application is not limited by an order of described actions, as certain steps may be performed in other orders or simultaneously according to the present application. Secondly, those skilled in the art should also be aware that the embodiments described in the description are all preferred embodiments, and the actions and modules involved may not necessarily be necessary for the present application.

In the above embodiments, descriptions of each embodiment have their own emphasis. For a part that is not detailed in one embodiment, please refer to relevant descriptions of other embodiments.

In the several embodiments provided in the present application, it should be understood that a disclosed device can be implemented in other ways. For example, the device embodiments described above are only illustrative, such as division of units, which is only a logical function division, in practical implementation, there may be other division methods, such as multiple units or components being combined or integrated into another system, or some characteristics being ignored or not executed. On an other hand, a mutual coupling or direct coupling or communication connection displayed or discussed can be indirect coupling or communication connection through some service interfaces, devices or units, which can be electrical or other forms.

Units described as separate components may or may not be physically separated, and components displayed as units may or may not be physical units, that is, which can be located in one place or distributed across multiple network units. Some or all of the units can be selected according to actual needs to achieve a purpose of the embodiment.

In addition, functional units in various embodiments of the present application can be integrated into one processing unit, physically exist separately, or integrate two or more units into one unit. Integrated units mentioned above can be implemented in a form of hardware or software functional units.

When the integrated units are implemented in the form of software functional units and sold or used as independent products, which can be stored in a computer-readable memory. Based on this understanding, a technical solution of the present application can essentially or partially contribute to an existing technology, or all or part of the technical solution can be embodied in a form of a software product, this computer software product is stored in a memory and includes several instructions to enable a computer device (which can be a personal computer, server, or network device, etc.) to perform all or part of steps of the various embodiments of the present application. The storage device mentioned above include various media such as USB flash drives, portable hard drives, magnetic disks, or optical disks that can store program code.

The above is only an exemplary embodiment of the present disclosure and cannot be used to limit the scope of the present disclosure. However, any equivalent changes and modifications made in accordance with the teachings disclosed herein are still within the scope of this disclosure. Those skilled in the art will easily come up with other implementation schemes of this disclosure after considering the disclosure of the instructions and practical truths.

The present application is intended to cover any variations, uses, or adaptive changes of the present disclosure, which follow the general principles of the present disclosure and include common knowledge or customary technical means in the art not disclosed in the present disclosure. The description and embodiments are only considered exemplary, and the scope and spirit of this disclosure are limited by the claims.

## Claims

1. A weld seam size inspection method based on point cloud matching, comprising:
obtaining a first point cloud data of a region to be welded before welding collected by a three-dimensional laser scanner, as well as a second point cloud data of a welded region after welding collected by the three-dimensional laser scanner;
based on the first point cloud data and the region to be welded, determining a point cloud data of a region of interest to be welded;
based on the second point cloud data and the welded region, determining a point cloud data of a welded region of interest;
matching the point cloud data of the region of interest to be welded with the point cloud data of the welded region of interest to obtain a matching result;
extracting a weld seam point cloud set according to the matching result; and
based on a point cloud principal component analysis method, analyzing the weld seam point cloud set and obtaining sizes of each weld seam.

2. The weld seam size inspection method based on point cloud matching according to claim 1, wherein, obtaining a first point cloud data of the region to be welded before welding collected by the three-dimensional laser scanner, as well as a second point cloud data of the welded region after welding collected by the three-dimensional laser scanner, comprising:
adjusting a position and orientation of the three-dimensional laser scanner according to the weld seam in the region to be welded, so that the weld seam in the region to be welded is within a measurement range of the three-dimensional laser scanner;
obtaining the first point cloud data of the region to be welded collected by the three-dimensional laser scanner;
adjusting the position and orientation of the three-dimensional laser scanner according to the weld seams in the welded region, so that the weld seams in the welded region is within the measurement range of the three-dimensional laser scanner; and
obtaining the second point cloud data of the welded region collected by the three-dimensional laser scanner.

3. The weld seam size inspection method based on point cloud matching according to claim 1, wherein, based on the first point cloud data and the region to be welded, determining a point cloud data of the region of interest to be welded, further comprising:
denoising and downsampling the first point cloud data to obtain a first target point cloud data;
estimating a first maximum value set and a first minimum value set of weld seam coordinates in a three-dimensional coordinate direction in the region to be welded; and
determining the point cloud data of the region of interest to be welded based on the first maximum value set, the first minimum value set, and the first target point cloud data.

4. The weld seam size inspection method based on point cloud matching according to claim 1, wherein, based on the second point cloud data and the welded region, determining a point cloud data of the welded region of interest, comprising:
denoising and downsampling the second point cloud data to obtain a second target point cloud data;
estimating a second maximum value set and a second minimum value set of weld seam coordinates in the three-dimensional coordinate direction in the welded region; and
determining the point cloud data of the welded region of interest based on the second maximum value set, the second minimum value set, and the second target point cloud data.

5. The weld seam size inspection method based on point cloud matching according to claim 1, wherein, matching the point cloud data of the region of interest to be welded with the point cloud data of the welded region of interest to obtain the matching result, comprising:
based on an iterative closest point method, matching the point cloud data of the region of interest to be welded with the point cloud data of the welded region of interest, and calculating a position and orientation transformation matrix; and
using the position and orientation transformation matrix as the matching result.

6. The weld seam size inspection method based on point cloud matching according to claim 5, wherein, extracting the weld seam point cloud set according to the matching result, comprising:
based on the position and orientation transformation matrix in the matching result, converting the point cloud data of the welded region of interest to the region of interest to be welded;
for any target point in the welded region of interest:
determining the point cloud data with a shortest Euclidean distance to a target point in the region of interest to be welded, and using a point corresponding to the point cloud data of the welded region with the shortest Euclidean distance greater than a weld seam extraction threshold as a weld seam point in the region of interest to be welded, obtaining the weld seam point cloud set.

7. The weld seam size inspection method based on point cloud matching according to claim 1, wherein, based on the point cloud principal component analysis method, analyzing the weld seam point cloud set and obtaining sizes of each weld seam, comprising:
comparing the sizes of each weld seam with a preset standard weld seam size range, wherein the sizes of the weld seam comprise length, width, and depth;
indentifying the weld seam do not conform to the preset standard weld seam size range as an unqualified weld seam;
indentifying the weld seam that conform to the preset standard weld seam size range as a qualified weld seam.

8. A weld seam size inspection system based on point cloud matching, comprising:
a point cloud data acquisition module (301) is configured to obtain a first point cloud data of a region to be welded before welding collected by a three-dimensional laser scanner, and obtain a second point cloud data of a welded region after welding collected by the three-dimensional laser scanner;
a region of interest acquisition module (302) is configured to determine point cloud data of a region of interest to be welded based on the first point cloud data and the region to be welded; based on the second point cloud data and the welded region, determine the point cloud data of a welded region of interest;
a point cloud matching module (303) is configured to match the point cloud data of the region of interest to be welded with the point cloud data of the welded region of interest, and to obtain a matching result;
a weld seam point cloud set extraction module (304) is configured to extract weld seam point cloud set based on the matching result; and
a weld seam size generation module (305) is configured to analyze the weld seam point cloud set based on a point cloud principal component analysis method, and obtain sizes of each weld seam.

9. A computer-readable storage medium with a plurality of instructions stored thereon, wherein, the instructions are suitable for loading and executing the method according to claim 1 by a processor.

10. An electronic device, comprising a processor, a memory, and a transceiver, wherein, the memory is configured to store instructions, the transceiver is configured to communicate with other devices, and the processor is configured to execute instructions stored in the memory to enable the electronic device to implement the method according to claim 1.
